(19) Europäisches Patentamt / European Patent Office / Office européen des brevets

(11) **EP 2 236 988 B1**

(12) **FASCICULE DE BREVET EUROPEEN**

(45) Date de publication et mention
de la délivrance du brevet:
**06.07.2011 Bulletin 2011/27**

(51) Int Cl.:
**G01C 23/00** *(2006.01)*   **G01D 7/02** *(2006.01)*
**B64D 43/02** *(2006.01)*

(21) Numéro de dépôt: **10001566.8**

(22) Date de dépôt: **16.02.2010**

(54) **Procédé de détermination et d'affichage d'indications de pilotage et indicateur de pilotage pour mettre en oeuvre ledit procédé**

Verfahren zur Bestimmung und Anzeige von Steuerungsangaben und Steuerungsanzeige zur Durchführung des Verfahrens.

Method for determining and displaying steering indications and steering indicator for implementing said method.

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.03.2009 FR 0901137**

(43) Date de publication de la demande:
**06.10.2010 Bulletin 2010/40**

(73) Titulaire: **EUROCOPTER**
**13725 Marignane Cédex (FR)**

(72) Inventeurs:
• **De Bono, Karine**
**13009 Marseille (FR)**
• **Godard, Michel**
**13410 Lambesc (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:
**EP-A- 0 816 226**       **WO-A-2006/081334**
**US-A1- 2001 044 679**   **US-A1- 2003 071 828**
**US-A1- 2005 042 094**

## Description

La présente invention se rapporte au domaine technique général du pilotage d'un aéronef à voilure tournante et en particulier au domaine technique général des instruments de pilotage. Ces instruments sont utilisés par le pilote pour surveiller les paramètres environnementaux et techniques liés au vol. Ces instruments permettent au pilote d'une part d'être informé en cas de dysfonctionnement des équipements, du genre moteurs ou autres de l'aéronef et d'autre part d'assister ledit pilote dans les différentes phases de pilotage dudit aéronef.

Le pilotage par exemple d'un hélicoptère, s'effectue grâce à la surveillance de nombreux instruments sur un tableau de bord, qui sont pour la plupart représentatifs du fonctionnement de l'ensemble moteur et d'autres équipements de l'aéronef. Pour des raisons physiques, il existe de nombreuses limitations que le pilote doit prendre en considération à chaque instant du vol. Ces limitations dépendent généralement de la phase de vol et des conditions extérieures.

La plupart des hélicoptères construits actuellement sont équipés d'un ou deux turbomoteurs, appelé groupe turbomoteur, généralement à turbine libre. Un boîte de réduction, appelée boîte de transmission principale permet de réaliser la liaison cinématique entre l'ensemble moteur et la voilure tournante, en l'occurrence un rotor entraînant des pales.

On connaît par exemple par l'intermédiaire du brevet EP 0 816 226, un indicateur de pilotage pour aéronef, destiné à fournir la marge de puissance disponible sur au moins un moteur de l'aéronef en fonction des conditions de vol. L'indicateur utilise des signaux de capteurs aptes à délivrer des informations relatives à différents paramètres de surveillance du moteur, des moyens de traitement des informations issues desdits capteurs et des moyens d'affichage présentant, sur un écran de visualisation, les informations traitées relatives au paramètre, parmi lesdits paramètres de surveillance du moteur, dont la valeur est la plus proche de la valeur limite définie pour ledit paramètre. Les valeurs limites sont établies en tenant compte, en temps réel, de la pression et de la température ambiantes.

L'indicateur de pilotage précité identifie donc, en valeurs relatives, parmi les paramètres essentiels de surveillance du moteur, celui qui est le plus proche de sa limite. Les informations relatives aux limitations à respecter sont alors regroupées sur un affichage unique, en permettant d'une part, d'effectuer une synthèse et de présenter uniquement le résultat de cette synthèse, afin de simplifier la tâche du pilote et d'autre part de gagner de la place sur la planche de bord.

L'indicateur de pilotage comprend ainsi différents capteurs relatifs aux différents paramètres à surveiller et aptes à délivrer les informations correspondant à ces différents paramètres à un calculateur traitant lesdites informations. Des moyens d'affichage présentent alors sur un écran de visualisation, les informations relatives au paramètre, dit « paramètre limitant », parmi lesdits paramètres de surveillance du moteur dont la valeur actuelle est la plus proche de la valeur limite pour ledit paramètre. Un tel indicateur de pilotage est appelé « Instrument de Première Limitation » ou « IPL» en abrégé.

Dans l'exemple spécifique d'un aéronef à voilure tournante, par exemple un hélicoptère, comportant au moins un turbomoteur et au moins un rotor, les paramètres particuliers de surveillance sont liés au dit turbomoteur et à la boîte de transmission principale.

Des indicateurs de pilotage du genre IPL actuels, ne sont cependant pas suffisants, dans certains cas, dans l'information qu'ils restituent au pilote. En effet, le pilote est également amené à utiliser des informations complémentaires, se rapportant à des paramètres complémentaires, de nature différente et visualisés séparément, pour effectuer mentalement une synthèse avant d'engager des actions de pilotage adéquates. Ceci ne contribue pas à simplifier la tâche du pilote qui est souvent amené à prendre des décisions extrêmement rapidement pour ne pas mettre en danger l'équipage et/ou pour ne pas menacer l'intégrité de l'aéronef. Parmi ces paramètres complémentaires, on trouve des paramètres essentiels au pilotage comme par exemple la vitesse de rotation du rotor.

La vitesse de rotation du rotor doit effectivement être surveillée au même titre que les paramètres de surveillance qui sont traités par l'instrument de première limitation. Un écart trop important entre la vitesse de rotation réelle du rotor et la vitesse de rotation normale du rotor, dite « vitesse de rotation de référence », peut avoir des conséquences graves et irréversibles pour l'aéronef.

Dans certaines phases de pilotage, lorsque la vitesse de rotation du rotor s'écarte de la vitesse de rotation de référence, le pilote agit sur le pas collectif des pales. Ainsi, lorsque la vitesse de rotation réelle est trop importante, le pilote augmente le pas collectif pour freiner le mouvement du rotor. A l'inverse, lorsque la vitesse de rotation réelle du rotor est trop faible, le pilote diminue le pas collectif pour augmenter ladite vitesse de rotation réelle du rotor.

Ces opérations de pilotage ne sont pas sans danger dans la mesure où il existe des limites physiques pour la vitesse de rotation du rotor, qui ne doivent en aucun cas être dépassées. On définit ainsi une vitesse de rotation maximale du rotor. En outre, en dehors des limitations physiques liées à la boîte de transmission principale ou au moyeu rotor, il existe des limites de décrochage qui ne doivent pas être dépassées. On définit ainsi une vitesse de rotation minimale du rotor à la sortie de la boîte de transmission principale. La vitesse de rotation réelle du rotor doit par conséquent rester dans une plage délimitée par les vitesses de rotation maximale et minimale.

Le dépassement de la vitesse de rotation maximale, correspond à un dépassement d'une position limite inférieure du pas collectif et à une vitesse de rotation des pales supérieure à celle imposée par la boîte de transmission principale. Ceci est rendu possible par l'incorporation d'un mécanisme de roue libre, connu en tant que tel, dans la boîte de transmission principale. Il en résulte une interruption de la transmission du couple mécanique entre le groupe turbomoteur et la boîte de transmission principale. Concrètement, le pilote se trouve dans une situation où il ne contrôle plus la vitesse de rotation du rotor. Le pilotage de l'aéronef peut devenir alors très difficile voire impossible. Le pilote se trouve confronté en outre à un fort risque de détérioration de pièces mécaniques et une opération de maintenance s'imposera dans le meilleur des cas.

Lorsqu'il y a une interruption de la transmission du couple mécanique entre le groupe turbomoteur et la boîte de transmission principale, sans dépassement de la vitesse de rotation maximale du rotor, le pilote se trouve dans la situation où le pas collectif à dépassé un seuil appelé « pas de désynchronisation ». Une telle situation est compatible par exemple avec une phase de vol appelée « autorotation » que le pilote peut engager dans certaines circonstances et notamment en cas de perte moteur. La valeur du pas de désynchronisation est indépendante des vitesses de rotation maximale et minimale du rotor.

Le dépassement, en diminuant, de la vitesse de rotation minimale, correspond à un dépassement d'une limite supérieure de réglage du pas collectif et à une vitesse de rotation des pales inférieure à celle imposée par la boîte de transmission principale. Il en résulte une demande de puissance accrue au turbomoteur, lequel peut atteindre relativement rapidement une limite de fonctionnement entraînant la perte dudit turbomoteur. Dans tous les cas de figure, le pilote risque d'être confronté à une portance insuffisante ou défaillante de la voilure tournante.

Dans le cas particulier d'un aéronef comportant au moins deux ensembles moteurs du genre turbomoteurs, le dysfonctionnement de l'un desdits turbomoteurs peut être compensée, pendant une durée donnée, par l'autre turbomoteur. Pendant cette durée, même limitée, le problème présenté ci-dessus reste entier. On parle alors de désalignement entre les deux turbomoteurs. Le pilote dispose alors d'une indication affichée dans l'instrument de première limitation et correspondant à une position du pas collectif appelée « pas refuge » pour optimiser l'utilisation du turbomoteur encore opérationnel.

On connaît également par l'intermédiaire du document WO2006/081334 un indicateur de pilotage pour aéronef destiné à fournir la marge de puissance disponible sur au moins un moteur de l'aéronef en fonction des conditions de vol. L'indicateur décrit affiche une pluralité de paramètres et notamment un premier paramètre dont la valeur normalisée est la plus élevée, et un second paramètre dont la valeur normalisée est la plus proche de sa limite normalisée. (cf. IPL). Ces indicateurs permettent d'informer le pilote sur la vitesse de rotation du rotor, les valeurs maximale et minimale de la vitesse de rotor, la vitesse de rotation de la turbine du moteur. Un pilotage avec une vitesse de rotation du rotor différente de la valeur de référence est également prévu.

On connaît également par l'intermédiaire du document US2001/044679 un indicateur de pilotage pour aéronef destiné à fournir la marge de puissance disponible sur au moins un moteur de l'aéronef en fonction des conditions de vol. L'indicateur affiche le paramètre le plus proche de sa limite (IPL) et indique au pilote lorsque la vitesse de rotation du rotor tombe sous une limite déterminée, la correction de pas collectif à engager.

Le but de la présente invention vise à améliorer le contrôle d'un aéronef en anticipant une présentation d'informations nécessaires à une réaction rapide et adéquate du pilote.

L'objet de la présente invention vise à proposer un nouveau procédé d'aide au pilotage pour un aéronef à voilure tournante, permettant de simplifier la tâche du pilote et d'améliorer sa rapidité de prise de décision pour engager des actions de pilotage appropriées.

Un autre objet de la présente invention vise à proposer un nouvel indicateur de pilotage pour un aéronef à voilure tournante, dont l'utilisation par le pilote est particulièrement fiable, simple et rapide.

Les objets assignés à l'invention sont atteints grâce à un procédé d'aide au pilotage d'un aéronef à voilure tournante consistant à utiliser la valeur réelle et la valeur de référence de la vitesse de rotation d'au moins un rotor et à présenter sur un écran de visualisation, grâce à des moyens d'affichage, une échelle mobile pour indiquer la position du pas collectif, caractérisé en ce qu'il consiste :

- à utiliser une valeur limite maximale et une valeur limite minimale pour la vitesse de rotation du rotor,

- à déterminer le pas de désynchronisation correspondant à la position du pas collectif à partir de laquelle la transmission du couple mécanique entre un groupe turbomoteur et la boîte de transmission principale est interrompue,

- à afficher le pas de désynchronisation sur l'échelle mobile à l'aide d'un repère flottant,

- à traduire en temps réel et en fonction de paramètres physiques de vol, la valeur limite maximale et la valeur limite minimale, respectivement en position limite inférieure et en position limite supérieure du pas collectif, lesdites positions limites étant actives,

- à afficher les positions limites inférieure et supérieure sur l'échelle mobile,

- à comparer en temps réel la valeur réelle de la vitesse de rotation du rotor à la valeur de référence de la vitesse de rotation du rotor,

- et à afficher sur l'écran de visualisation, lorsqu'il apparaît un écart déterminé entre la valeur réelle et la valeur de référence de la vitesse de rotation du rotor, au moins une information corrective, au moins visuelle, sur l'action que doit entreprendre le pilote sur le réglage du pas collectif.

Selon un exemple de mise en oeuvre conforme à l'invention, le procédé consiste à utiliser une information corrective dont la présentation change lorsque la position du pas collectif s'approche de la position limite inférieure ou de la position limite supérieure, pour attirer davantage l'attention pilote.

Selon un exemple de mise en oeuvre conforme à l'invention, le procédé consiste à combiner l'information corrective visuelle avec une alerte sonore en cas de dépassement par la valeur réelle, de la valeur limite maximale ou de la valeur limite minimale de la vitesse de rotation du rotor.

Selon un exemple de mise en oeuvre conforme à l'invention, le procédé consiste à déterminer le pas de désynchronisation par l'intermédiaire d'un algorithme dans lequel interviennent des données théoriques et/ou des données mesurées lors d'essais en vol.

Selon un exemple de mise en oeuvre conforme à l'invention, le procédé consiste à utiliser un Instrument de Première Limitation, lequel permet grâce à des moyens d'affichage de présenter sur l'écran de visualisation des informations relatives à un paramètre, parmi les paramètres de surveillance de l'aéronef dont la valeur réelle est la plus proche de la valeur limite définie pour ledit paramètre ainsi que d'indiquer sur ledit écran de visualisation l'échelle mobile.

Selon un exemple de mise en oeuvre conforme à l'invention, le procédé consiste grâce à un cadran complémentaire à afficher dans une fenêtre fixe au voisinage de l'échelle mobile, une valeur digitale correspondant à la valeur réelle de la vitesse de rotation du rotor.

Selon un exemple de mise en oeuvre conforme à l'invention, le procédé consiste à associer à la fenêtre fixe, une échelle mobile complémentaire, laquelle présente des zones de couleur différente et une zone centrale neutre comportant un graduation centrale, lesdites zones correspondant à des valeurs réelles Nr de la vitesse de rotation du rotor et à déplacer ladite échelle mobile complémentaire pour afficher la zone de couleur comportant la valeur réelle courante en regard de la fenêtre fixe constituant un autre repère fixe.

Selon un exemple de mise en oeuvre conforme à l'invention, le procédé consiste à utiliser en tant que paramètres physiques de vol, notamment des valeurs mesurées de la température et de l'altitude, des valeurs de la vitesse d'avancement de l'aéronef ainsi que des paramètres véhicules du genre vitesse de rotation du rotor, vitesse de rotation de turbine, couple moteur, couple BTP, masse de l'aéronef et des paramètres d'organes de commande.

Selon un exemple de mise en oeuvre conforme à l'invention, le procédé consiste à utiliser un calculateur d'un instrument de Première Limitation pour déterminer en temps réel les positions limites supérieure et inférieure du pas collectif ainsi que le pas de désynchronisation. Ces positions sont déterminées en temps réel, notamment en fonction de la vitesse de rotation du rotor.

Selon un exemple de mise en oeuvre conforme à l'invention, le procédé consiste à utiliser un calculateur indépendant d'un Instrument de Première Limitation pour déterminer en temps réel les positions limites supérieure et inférieure du pas collectif, ainsi que le pas de désynchronisation. Ces positions sont déterminées en temps réel, notamment en fonction de la vitesse de rotation du rotor.

Selon un exemple de mise en oeuvre conforme à l'invention, le procédé consiste à utiliser des données mesurées lors d'essais en vol pour déterminer en temps réel les positions limites supérieure et inférieure du pas collectif ainsi que le pas de désynchronisation.

Selon un exemple de mise en oeuvre conforme à l'invention, le procédé consiste lorsque l'aéronef dispose d'au moins deux ensembles moteurs, à indiquer au moins visuellement sur le cadran complémentaire au voisinage de l'échelle mobile complémentaire, le dysfonctionnement de l'un des ensembles moteurs.

Les objets assignés à l'invention sont également atteints à l'aide d'un Indicateur de pilotage d'un aéronef, comportant des capteurs aptes à délivrer des informations relatives à différents paramètres de surveillance de l'aéronef, des moyens de traitement desdites informations du genre calculateur et des moyens d'affichage pour présenter sur un écran de visualisation des informations,
caractérisé en ce qu'il comprend :

- une échelle mobile par rapport à un repère fixe sur l'écran de visualisation, indiquant la position du pas collectif,

- des moyens de traitement complémentaires pour traduire en temps réel des valeurs limites maximale et minimale prédéterminées de la vitesse de rotation du rotor respectivement en positions limites inférieure et supérieure du pas collectif, lesdites positions limites étant actives,

- lesdits moyens de traitement complémentaires permettant de déterminer le pas de désynchronisation correspondant à la position du pas collectif à partir de laquelle la transmission du couple mécanique entre le groupe turbomoteur et la boîte de transmission principale est interrompue,

- des moyens d'affichage pour afficher en temps réel les positions limites inférieure et supérieure ainsi que le pas de désynchronisation sur l'échelle mobile,

- les moyens de traitement complémentaires comportant des moyens de comparaison pour comparer en temps réel la valeur réelle à la valeur de référence de la vitesse de rotation du rotor,

- les moyens de traitement complémentaires comportant également des moyens d'activation des moyens d'affichage pour afficher sur l'écran de visualisation, en fonction du résultat de la comparaison donnant l'écart entre la valeur réelle et la valeur de référence de la vitesse de rotation du rotor, une information corrective, au moins visuelle, sur l'actionnement du manche de pas collectif à entreprendre.

Selon un exemple de réalisation conforme à l'invention, les moyens de traitement, les moyens de traitement complémentaires, les moyens d'affichage et les moyens d'activation sont pilotés par un calculateur de l'Instrument de Première Limitation.

Selon un autre exemple de réalisation conforme à l'invention, les moyens de traitement complémentaires et les moyens d'activation sont pilotés par un calculateur distinct du calculateur de l'Instrument de Première Limitation.

Selon un exemple de réalisation conforme à l'invention, le calculateur comporte des ressources logicielles pour déterminer par des opérations de calcul, d'une part les positions limites supérieure et inférieure du pas collectif et d'autre part le pas de désynchronisation.

Selon un exemple de réalisation conforme à l'invention, le calculateur comporte également des moyens de mémorisation dans lesquels sont stockées des données prédéterminées et des données d'essais en vol, lesdites données étant utilisées dans les opérations de calcul.

Selon un exemple de réalisation conforme à l'invention, l'écran de visualisation comprend deux cadrans juxtaposés, l'un étant utilisé pour un instrument de première limitation et l'autre étant utilisé notamment pour afficher l'échelle mobile indiquant les positions de pas limites et le pas de désynchronisation.

Selon un autre exemple de réalisation conforme à l'invention, l'écran de visualisation comprend un cadran unique utilisé pour un instrument de première limitation et pour afficher l'échelle mobile indiquant les positions de pas limites et le pas de désynchronisation.

Selon un exemple de réalisation conforme à l'invention, l'indicateur de pilotage comprend un cadran complémentaire indiquant la valeur réelle de la vitesse de rotation du rotor, dans une fenêtre fixe laquelle constitue un autre repère fixe, au moins une information visuelle complémentaire sur l'écart entre la valeur réelle et la valeur de référence de la vitesse de rotation du rotor et/ou au moins une information sur l'état de fonctionnement du ou des ensembles moteurs.

Les objets assignés à l'invention sont également atteints à l'aide d'un instrument de première limitation amélioré pour un aéronef à voilure tournante, comportant un indicateur de pilotage conforme à l'invention.

Les objets assignés à l'invention sont également atteints à l'aide d'un aéronef à voilure tournante du genre hélicoptère comportant un indicateur de pilotage conforme à l'invention.

Le procédé d'aide au pilotage conforme à l'invention permet d'utiliser en association avec un indicateur de pilotage ou dans l'instrument de Première Limitation, la valeur réelle de la vitesse de rotation du rotor ainsi que d'autres informations relatives à la vitesse de rotation du rotor. Le pilote dispose ainsi d'un indicateur de pilotage qui prend en compte un paramètre supplémentaire et essentiel, comparativement aux instruments antérieurs qui ne prenaient pas en compte ladite valeur réelle de la vitesse de rotation du rotor.

Le pilote n'a pas à chercher sur une autre cadran du tableau de bord une information sur la vitesse de rotation du rotor et/ou sur les limites qui s'y rattachent pour l'analyser et engager une action corrective de pilotage si cela s'avérait nécessaire.

En outre, le procédé et l'indicateur, conformes à l'invention, informent le pilote de la marge de manoeuvrabilité de l'aéronef. Le pilote sait instantanément avec quelle amplitude il peut manipuler le manche du pas collectif pour ne pas dépasser des valeurs particulières ou critiques ou gérer une phase de vol particulière telle que l'autorotation.

Le pilote n'a par ailleurs pas à calculer ou à estimer ces limites, ce qui facilite sa tâche.

Dans les aéronefs à voilure tournante connus, le pilote ne peut en général que constater a posteriori, une éventuelle augmentation ou une diminution de la vitesse de rotation du rotor, suite à une action sur le manche de pas collectif. La conséquence de l'action du pilote pourrait être contraire au but recherché. Ceci peut dans certains cas, être dangereux au cours du pilotage de l'aéronef. Grâce au procédé d'aide au pilotage et grâce à l'indicateur de pilotage conformes à l'invention, le pilote sait en temps réel de quelle limite il s'approche et quelle action doit être engagée sur le manche de réglage du pas collectif pour revenir à une situation normale et ce, pour toutes les phases de vol, d'atterrissage, de décollage ou d'autorotation. Le pilote dispose ainsi en permanence d'une information sur la marge de manoeuvrabitité de l'aéronef.

L'invention et ses avantages apparaîtront avec plus de détails dans le cadre de la description qui suit avec un exemple de réalisation, donné à titre illustratif et non limitatif, en référence aux figures annexées qui représentent :

- la figure 1a, une illustration schématique d'un exemple d'écran général de visualisation d'informations provenant de divers instruments de l'aéronef et notamment d'un exemple de réalisation d'un indicateur de pilotage conforme à l'invention,

- la figure 1b, une illustration schématique d'un autre exemple d'écran général de visualisation d'informations provenant de divers instruments de l'aéronef et notamment d'un autre exemple de réalisation d'un indicateur de pilotage conforme à l'invention,

- les figures 2 à 6, un exemple d'indicateur de pilotage conforme à l'invention présentant des retours d'informations au pilote pour différentes phases de fonctionnement de l'aéronef,

- la figure 7 à 9, des illustrations détaillées de l'indicateur de pilotage de la figure 1b, et correspondant aux phases de fonctionnement illustrées respectivement aux figures 2, 3 et 4,

- et les figures 10 et 11, des illustrations détaillées de l'indicateur de pilotage de la figure 1b, et correspondant aux phases de fonctionnement illustrées respectivement aux figures 2 et 3, pour un aéronef comportant deux ensembles moteurs.

Les éléments structurellement et fonctionnellement identiques, présents sur plusieurs figures distinctes, sont affectés d'une seule et même référence numérique ou alphanumérique.

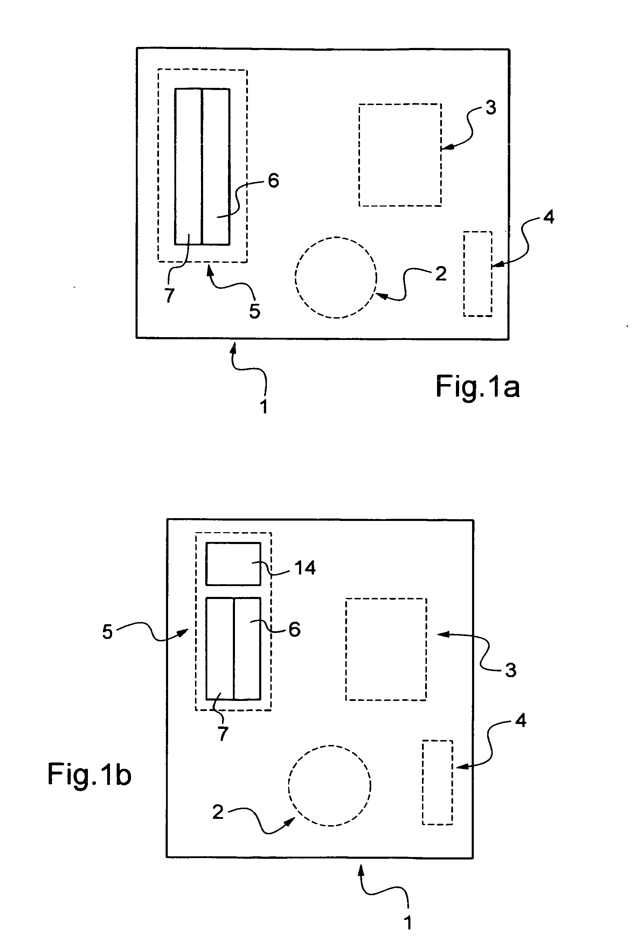

La figure 1a illustre un exemple de réalisation d'un écran général 1 de tableau de bord d'un aéronef comportant un indicateur de pilotage conforme à l'invention. L'écran général 1 comprend notamment différents indicateurs 2, 3 ou 4, connus en tant que tels et utilisés pour contrôler le fonctionnement de l'aéronef et à des fins de navigation.

L'indicateur de pilotage comprend par exemple un instrument de Première Limitation « IPL » associé à un écran de visualisation 5. L'instrument de Première Limitation, décrit sommairement dans ce qui précède, et déjà connu ne sera pas explicité davantage.

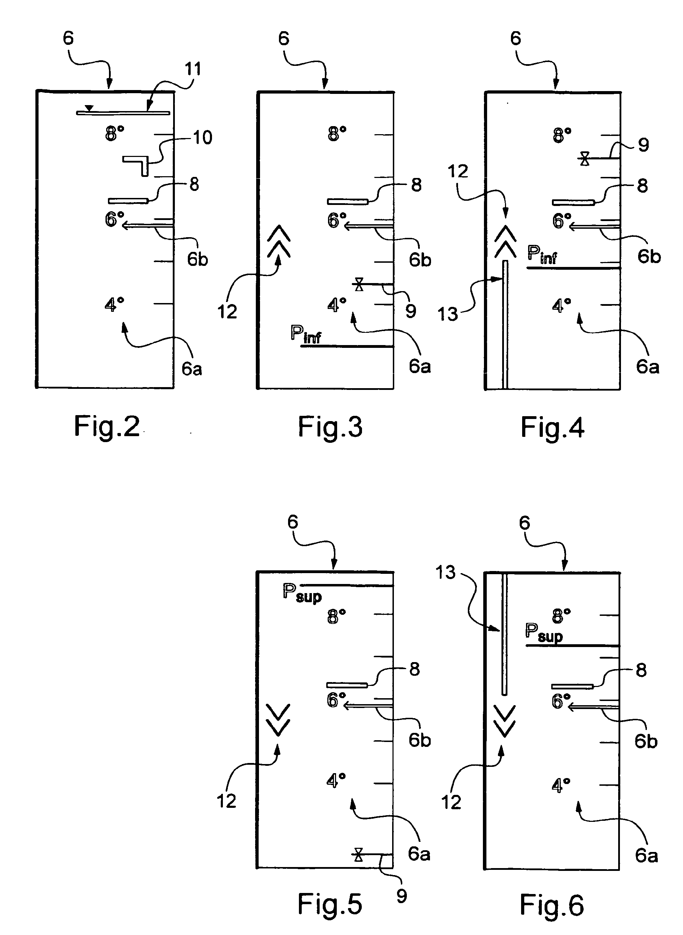

L'écran de visualisation 5 comprend un premier cadran 6 dans lequel s'affiche une échelle mobile 6a, illustrée aux figures 2 à 6. L'échelle mobile 6a comporte une graduation verticale, représentative des positions du pas collectif P. L'échelle mobile 6a se déplace en fonction du réglage du pas collectif P, par rapport à une référence fixe 6b sur l'écran de visualisation 5, ladite référence fixe 6b se trouvant alors en regard d'une graduation de l'échelle mobile 6a, indiquant position du pas collectif P courant commandée par le pilote.

L'écran de visualisation 5 comprend également une zone 7, ou un cadran complémentaire juxtaposé, pour l'affichage du paramètre limitant de l'instrument de première limitation IPL.

La référence fixe 6b est par exemple matérialisée par un repère fixe horizontal, derrière lequel se déplace selon un mouvement vertical l'échelle mobile 6a.

L'échelle mobile 6a présente également une graduation mobile correspondant à un pas de refuge 8, définit précédemment ainsi que des indications additionnelles 10, 11, non liées au fonctionnement du ou des turbomoteurs et pouvant également apparaître sur le cadran 6.

L'échelle mobile 6a présente également un repère flottant 9 sur l'échelle mobile 6a, correspondant à une position particulière du pas collectif P, appelée pas de désynchronisation Pds. Ce dernier est déterminé par le procédé conforme à l'invention.

Le pas de désynchronisation $P_{ds}$ est déterminé par exemple avec une loi en boucle fermée telle qu'indiquée ci-dessous :

$$P_{ds} = P + \left(K - W_m\right) \times \left(\frac{\Delta P}{\Delta W_m}\right) + \left(N_R - N_{R0}\right) \times \left(\frac{\Delta P}{\Delta N_R}\right) \times C$$

avec $C$=1 si $N_R \geq N_{R0}$ et $C$=0 si $N_R \leq N_{R0}$.

Dans cette formule $P$ représente la position courante mesurée du pas collectif, $W_m$ représente la valeur mesurée de la puissance transmise par la boîte de transmission principale au rotor, $N_R$ représente la vitesse de rotation courante du rotor et $N_{R0}$ représente la vitesse de rotation de référence du rotor.

Le terme $K$ représente la variation linéaire d'ordre n, n variant de 1 à 4, entre le pas courant $P$ et la vitesse d'impact $V_i$ du disque rotor. On utilise alors la formule :

$$K = a \times P^n + b \times P^{n-1} + \ldots + c \times P^2 + d \times P + e$$

avec les coefficients $a$, $b$, $c$, $d$ et e qui sont de la forme :

$$i_1 \times V_i{}^2 + i_2 \times V_i + i_3$$

où $i_1$, $i_2$ et $i_3$ sont des constantes déterminées par simulation.

La vitesse d'impact $V_i$ du disque rotor est la vitesse moyenne de l'ensemble rotor-pales par rapport à la masse d'air et non par rapport au sol. On établit les vitesses d'impact du disque rotor en fonction des vitesses air calculées *TAS (True Air Speed)*.

Le terme $K$ peut donc être calculé à partir d'une courbe préenregistrée, obtenue par simulation et donnant la variation de la vitesse d'impact du disque rotor mesurée, en fonction de la variation du pas courant $P$. Pour chaque aéronef de masse différente, il existe une telle courbe spécifique.

Le terme $\dfrac{\Delta P}{\Delta W_m}$ représente le rapport entre la variation de pas et la variation de puissance transmise au rotor

et le terme $\dfrac{\Delta P}{\Delta N_R}$ représente le rapport entre la variation de pas et la variation de la vitesse de rotation du rotor.

Le terme $\dfrac{\Delta P}{\Delta W_m}$ est calculé à partir d'une courbe préenregistrée, obtenue par une simulation réalisée à l'aide d'un modèle connu, donnant la variation de puissance mesurée en fonction de la variation de pas. Pour chaque aéronef de masse différente, il existe une courbe spécifique.

Le terme $\dfrac{\Delta P}{\Delta N_R}$ est calculé à partir d'une courbe préenregistrée, obtenue par une simulation à l'aide d'un modèle connu, donnant la variation de la vitesse de rotation du rotor en fonction de la variation de pas. Pour chaque aéronef de masse différente, il existe une courbe spécifique.

La forme des différentes courbes mentionnées précédemment, peut également dépendre de la vitesse d'avancement de l'aéronef.

Les trois termes ci-dessus peuvent être obtenus, par calcul et/ou par simulations se basant sur des essais en vol. Une solution pourrait consister à calculer lesdits termes puis à les réajuster en vol.

Le pilote sait ainsi en temps réel quelle est sa marge de manoeuvrabilité par rapport au pas de désynchronisation, en visualisant la graduation repérée par la référence fixe 6b et par le repère flottant 9.

L'indicateur de pilotage conforme à l'invention comprend également des moyens de traitement complémentaires utilisant des valeurs limites maximale Nr+ et minimale Nr- de la vitesse de rotation du rotor Nr et traduisant en temps réel et en fonction de paramètres physiques de vol, lesdites valeurs limites maximale Nr+ et minimale Nr-, respectivement en positions limites inférieure Pinf et supérieure Psup du pas collectif. La limite inférieure Pinf du pas collectif correspond ainsi à une limite physique de tenue mécanique et la limite supérieure Psup du pas collectif correspond à une limite aérodynamique de portance.

Les positions limites Pinf et Psup sont actives, c'est-à-dire qu'elles ne sont pas figées sur l'échelle mobile 6a, mais qu'elles se déplacent sur ladite échelle mobile 6a de façon concomitante avec l'évolution des paramètres physiques de vol pris en considération par les moyens de traitement complémentaires. Il en est de même pour le pas de désynchronisation Pds, lequel est dans tous les cas de figure compris entre ces deux pas limites Pinf et Psup.

Pour déterminer la valeur Psup, correspondant à Nr-, on appliquera les procédés connus des Instruments de Première Limitation qui utilisent une relation Pas/Puissance.

Pour déterminer la valeur Pinf, correspondant à Nr+, on appliquera la formule décrite ci-dessus, dans laquelle

$N_{R0}$ est remplacé par Nr+ et en supprimant toute condition sur $N_R$, c'est-à-dire C=1 dans ce cas.

L'indicateur de pilotage conforme à l'invention comprend également des moyens d'affichage pour afficher en temps réel, les positions limites inférieure Pinf et supérieure Psup sur l'échelle mobile 6a.

Les moyens de traitement complémentaires comportent des moyens de comparaison pour comparer en temps réel la valeur réelle Nr de la vitesse de rotation du rotor à la valeur de référence Nr0 de la vitesse de rotation du rotor. Les moyens de traitement complémentaires sont donc réalisés avec des outils électroniques et informatiques tels qu'un calculateur dont le fonctionnement est géré par au moins un algorithme.

Les moyens de traitement complémentaires comportent également des moyens d'activation des moyens d'affichage pour afficher sur l'écran de visualisation 5, en fonction du résultat de la comparaison donnant l'écart entre la valeur réelle Nr et la valeur de référence Nr0 de la vitesse de rotation du rotor, une information corrective, au moins visuelle, sur l'actionnement du manche de pas collectif qu'il convient d'entreprendre.

L'information corrective se présente par exemple sous forme d'un premier signal 12, lequel peut être associé dans certaines circonstances à un second signal 13.

Selon un exemple de réalisation de l'indicateur de pilotage conforme à l'invention, les moyens de traitement, les moyens de traitement complémentaires, les moyens d'affichage et les moyens d'activation sont pilotés par un calculateur, par exemple de l'instrument de première limitation.

Le calculateur comporte des ressources logicielles pour déterminer par des opérations de calcul, les positions limites supérieure Psup et inférieure Pinf du pas collectif ainsi que le pas de désynchronisation Pds.

Selon un exemple de réalisation de l'indicateur de pilotage conforme à l'invention, le calculateur comporte également dès moyens de mémorisation dans lesquels sont stockées des données mesurées lors d'essais en vol se rapportant à des paramètres physiques de vol et de pilotage. Ces données sont utilisées dans les opérations de calcul pour déterminer les positions limites Pinf et Psup à partir des valeurs maximale Nr+ et minimale Nr-.

L'écran de visualisation 5 comprend par exemple deux cadrans juxtaposés 6 et 7, l'un 7 étant utilisé pour l'instrument de première limitation et l'autre 6 étant utilisé pour afficher l'échelle mobile 6a de réglage du pas collectif P.

Selon un autre exemple de réalisation, l'écran de visualisation 5 comprend un cadran unique utilisé par l'instrument de première limitation et pour afficher l'échelle mobile 6a du pas collectif, le premier signal 12 et le second signal 13.

Selon un exemple de réalisation, illustré notamment aux figures 1b, 7, 8 et 9, l'indicateur de pilotage comprend un cadran complémentaire 14 indiquant la valeur réelle Nr de la vitesse de rotation du rotor dans une fenêtre fixe 15 constituant également une autre repère fixe 16. La valeur réelle Nr de la vitesse de rotation du rotor est par exemple indiquée en pourcentage de la valeur de référence Nr0 ou en tours par minutes.

Le cadran complémentaire 14 comporte au moins une information visuelle complémentaire sur l'écart entre la valeur réelle Nr et la valeur de référence Nr0 de la vitesse de rotation du rotor. L'information visuelle complémentaire se présente par exemple sous forme d'échelle mobile complémentaire 17 se déplaçant sensiblement horizontalement dans une fenêtre additionnelle 18 en regard de l'autre repère fixe 16.

L'échelle mobile complémentaire 17 comporte une zone centrale neutre 19 comportant une graduation centrale 19a et des zones 20, 21 de couleur différente, de part et d'autre de ladite zone centrale neutre 19.

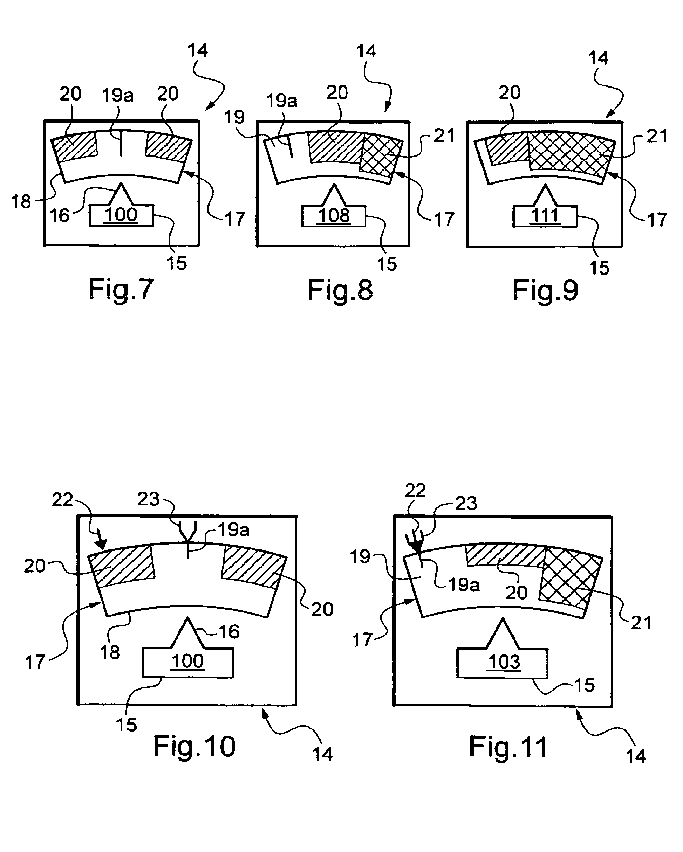

Dans l'exemple de réalisation illustré aux figures 10 et 11, l'échelle mobile complémentaire 17 est associée à au moins une information sur l'état de fonctionnement du ou des ensembles moteurs. Cette information est traduite par exemple dans le cas où l'aéronef comporte deux ensembles moteurs, par un symbole plein 22 et un symbole creux 23, susceptibles de se déplacer le long de la fenêtre additionnelle 18.

Le symbole plein 22 est représentatif du premier ensemble moteur et le symbole creux est représentatif du second ensemble moteur. Lorsque les deux ensembles moteurs fonctionnent correctement, c'est-à-dire qu'ils présentent en sortie moteur, une vitesse de rotation optimale, les deux symboles 22 et 23 sont superposés et restent dans une position alignée avec la graduation centrale 19a. On pourra se reporter par exemple à la figure 11.

En revanche, en cas de dysfonctionnement du premier ensemble moteur, le symbole plein 22 se dissocie du symbole creux 23 et se déplace vers la gauche à la figure 10. Seul le symbole creux 23 demeure dans sa position alignée avec la graduation centrale 19a, signifiant que le second ensemble moteur transmet le couple le plus élevé au rotor. La vitesse de rotation en sortie du second ensemble moteur reste optimale.

La figure 11 illustre un cas de fonctionnement dans lequel il n'y a pas de défaillance d'un moteur, mais dans lequel le pas de désynchronisation a été dépassé, en raison d'une augmentation de la valeur réelle Nr de la vitesse de rotation du rotor, affichée dans la fenêtre fixe 15. On se trouve alors dans un état désynchronisé. La valeur réelle Nr, digitale, est indiquée dans cet exemple, en pourcentage de la valeur de référence Nr0 de la vitesse de rotation du rotor.

Le fonctionnement de l'indicateur de pilotage est précisé dans la suite par l'intermédiaire de la présentation détaillée du procédé d'aide au pilotage conforme à l'invention.

Le procédé d'aide au pilotage d'un aéronef à voilure tournante consiste par exemple à utiliser un indicateur de pilotage en association avec un Instrument de Première Limitation « IPL », lequel permet grâce à des moyens d'affichage de présenter sur l'écran de visualisation 5 des informations relatives à un paramètre, parmi les paramètres de surveillance de l'aéronef, dont la valeur réelle, est la plus proche de la valeur limite définie pour ledit paramètre. Les instruments de Première Limitation sont connus en tant que tels et leurs fonctionnements ne seront donc pas décrits plus en détails.

Le procédé d'aide au pilotage consiste à utiliser la valeur réelle Nr et la valeur de référence Nr0 de la vitesse de rotation d'un rotor et à utiliser l'échelle mobile 6a sur l'écran de visualisation 5 indiquant la position du pas collectif P.

Le procédé peut aussi être utilisé sur des aéronefs comportant au moins deux voilures tournantes, par exemple deux rotors contrarotatifs.

Le procédé d'aide au pilotage consiste à utiliser une valeur limite maximale Nr+ et une valeur limite minimale Nr- de la vitesse de rotation du rotor. Ces valeurs limites maximale Nr+ et minimale Nr-, sont fixes pour un aéronef donné, mais leur traduction en positions limites de pas collectif Pinf et Psup peut varier en fonctions des paramètres ou des phases de vol. La détermination des valeurs limites maximale et minimale Nr+ et Nr-, est en tant que telle largement utilisée et connue par l'homme du métier pour définir des caractéristiques d'un aéronef et ne sera pas précisée davantage dans la présente.

Le procédé d'aide au pilotage consiste à traduire en temps réel et en fonction de paramètres physiques de vol, la valeur limite maximale Nr+ et la valeur limite minimale Nr-, respectivement en position limite inférieure Pinf et en position limite supérieure Psup du pas collectif. Ces positions limites Pinf et Psup sont actives et se déplacent sur l'échelle mobile 6a en fonction de l'évolution des paramètres physiques de vol et le cas échéant de paramètres moteurs.

Le procédé conforme à l'invention consiste également à déterminer le pas de désynchronisation Pds et à afficher ce dernier sur l'échelle mobile 6a avec le repère flottant 9.

Le procédé d'aide au pilotage consiste ensuite à afficher les positions limites inférieure Pinf et supérieure Psup sur l'échelle mobile 6a.

Le procédé d'aide au pilotage consiste ensuite à comparer en temps réel la valeur réelle Nr de la vitesse de rotation à la valeur de référence Nr0 de la vitesse de rotation du rotor.

Suite à cette étape de comparaison, Le procédé d'aide au pilotage consiste à afficher sur l'écran de visualisation 5, lorsque apparaît un écart déterminé entre la valeur réelle Nr et la valeur de référence Nr0 de la vitesse de rotation du rotor, au moins une information corrective, au moins visuelle, sur l'action que doit entreprendre le pilote sur le réglage du pas collectif pour rétablir une situation optimale.

Le procédé d'aide au pilotage consiste par exemple à utiliser une information corrective dont la présentation change lorsque le pas collectif s'approche de la position limite inférieure Pinf ou de la position limite supérieure Psup pour attirer davantage l'attention pilote.

La figure 2 illustre par exemple un fonctionnement normal alors que la figure 3 illustre une situation dans laquelle apparaît le premier signal 12 indiquant au pilote qu'il convient d'augmenter le pas collectif pour diminuer la valeur de la vitesse réelle Nr du rotor. Le premier signal 12 se présente par exemple sous forme de chevrons montants de couleur ambre.

La figure 4 illustre le cas où l'on est proche de la position limite Pinf et qu'il convient d'augmenter en urgence le pas collectif P pour diminuer la valeur réelle Nr de la vitesse de rotation du rotor et éviter d'atteindre la position limite Pinf. Le premier signal 12 est alors associé au second signal 13, lequel se présente sous forme de barre montante. Le premier signal 12 et le second signal 13 sont alors de couleur rouge pour marquer l'urgence d'entreprendre une manoeuvre corrective.

De façon similaire, les figures 5 et 6 illustrent le cas où apparaît la position limite supérieure Psup sur l'échelle mobile 6a, correspondant à une diminution de la valeur réelle Nr de la vitesse de rotation du rotor. Le premier signal 12 se présente sous forme de chevrons descendants de couleur ambre à la figure 5. Le pilote doit ainsi diminuer le pas collectif. A la figure 6, le premier signal 12 se présentant sous forme de chevrons descendants, est associé au second signal 13, lequel se présente sous forme de barre descendante. Les signaux 12 et 13 sont alors tous deux de couleur rouge, indiquant l'urgence d'une manoeuvre.

Le procédé d'aide au pilotage consiste par exemple à combiner l'information corrective visuelle comportant le premier signal 12 et le second signal 13, avec une alerte sonore en cas de dépassement de la valeur maximale Nr+ ou de la valeur minimale Nr- de la vitesse de rotation du rotor. Un tel dépassement est visualisé par les positions relatives des limites de pas collectif Pinf ou Psup de l'échelle mobile 6a par rapport à la référence fixe 6b. La référence fixe 6b dépasse alors l'une ou l'autre des positions limites Pinf ou Psup.

Selon un exemple de mise en oeuvre, illustré de façon générale à la figure 1b, à utiliser le cadran complémentaire 14 situé au dessus du premier cadran 6.

Le procédé d'aide au pilotage consiste par exemple à afficher dans la fenêtre fixe 15 du cadran complémentaire 14, au voisinage de l'échelle mobile 6a, une valeur digitale correspondant à la valeur réelle Nr de la vitesse de rotation du rotor.

Le procédé d'aide au pilotage consiste alors à associer à la fenêtre fixe 15, dans le cadran complémentaire 14, une échelle mobile complémentaire 17, laquelle présente des zones 20, 21 de couleur différente et la zone centrale neutre 19, correspondant à des valeurs réelles Nr particulières de la vitesse de rotation du rotor et à déplacer ladite échelle mobile complémentaire 17 pour afficher la zone de couleur correspondante en regard de la fenêtre fixe 15 constituant l'autre repère fixe 16.

L'échelle mobile complémentaire 17 se déplace sensiblement horizontalement dans la fenêtre additionnelle 18 et comporte la graduation centrale 19a dans la zone centrale neutre 19. La graduation centrale 19a est alignée avec le repère fixe 16 lorsque la valeur réelle Nr de la vitesse de rotation du rotor est optimale.

Lorsque la valeur réelle Nr augmente comme cela est illustré aux figures 8 et 9, l'échelle mobile complémentaire 17 se déplace et le repère fixe 16 pointe en direction de la zone 20 de couleur ambre à la figure 8 ou en direction de la zone 21 de couleur rouge à la figure 9, selon le cas.

Le procédé d'aide au pilotage consiste par exemple à utiliser en tant que paramètres physiques de vol, des valeurs mesurées de la température et de l'altitude, des valeurs de la vitesse d'avancement et/ou d'autres paramètres véhicules de l'aéronef.

Selon un exemple de mise en oeuvre, le procédé d'aide au pilotage consiste à utiliser un calculateur, par exemple celui de l'instrument de Première Limitation «IPL», pour déterminer en temps réel les positions limites supérieure Psup et inférieure Pinf du pas collectif P ainsi que le pas de désynchronisation Pds.

Avantageusement, le procédé d'aide au pilotage peut consister à utiliser également des données mesurées lors d'essais en vol pour déterminer notamment par des opérations de calcul, en temps réel, les positions limites supérieure Psup et inférieure Pinf du pas collectif P et pour déterminer le pas de désynchronisation Pds.

Selon un exemple de mise en oeuvre illustré aux figures 10 et 11, lorsque l'aéronef dispose de deux ensembles moteurs, le procédé d'aide au pilotage consiste par exemple à indiquer au moins visuellement sur l'échelle mobile complémentaire 17, le dysfonctionnement de l'un des ensembles moteurs.

Le dysfonctionnement de l'un des ensembles moteurs est schématisée à la figure 10, laquelle montre le symbole plein 22 décalé vers la gauche de manière à ne plus être aligné avec la graduation centrale 19a. Le symbole creux 23 représentatif du second ensemble moteur reste aligné avec la graduation centrale 19a, signifiant que le fonctionnement du second ensemble moteur n'est pas altéré et que c'est ce dernier qui transmet le couple le plus important au rotor. La figure 10 correspond ainsi à la présentation du premier cadran 6 tel qu'illustré à la figure 2.

La figure 11 illustre dans le cadre d'un bon fonctionnement des deux ensembles moteurs, une augmentation de la valeur réelle Nr de la vitesse de rotation du rotor. On se retrouve alors dans une situation similaire à celle illustrée à la figure 3 où il convient d'augmenter le pas collectif P pour rétablir un état de fonctionnement optimal.

Le premier cadran 6, faisant apparaître les positions limites Pinf et/ou Psup du pas collectif ainsi que le pas de désynchronisation grâce au repère flottant 9, permettent d'indiquer au pilote de quelle marge de manoeuvrabilité il dispose, par exemple pour effectuer ou engager des phases de pilotage en réponse à des contraintes ou par exemple pour engager une phase d'autorotation.

Naturellement, la présente invention est sujette à de nombreuses variations quant à sa mise en oeuvre. Bien que plusieurs modes de réalisation et de mise en oeuvre aient été décrits, on comprend bien qu'il n'est pas concevable d'identifier de manière exhaustive tous les modes possibles. Il est bien sûr envisageable de remplacer un moyen décrit ou une étape décrite par un moyen équivalent ou une étape équivalente sans sortir du cadre de la présente invention.

## Revendications

1. Procédé d'aide au pilotage d'un aéronef à voilure tournante consistant à utiliser la valeur réelle Nr et la valeur de référence Nr0 de la vitesse de rotation d'au moins un rotor et à présenter sur un écran de visualisation (5), grâce à des moyens d'affichage, une échelle mobile (6a) pour indiquer la position du pas collectif P, **caractérisé en ce qu'**il consiste :

   - à utiliser une valeur limite maximale Nr+ et une valeur limite minimale Nr- pour la vitesse de rotation du rotor,
   - à déterminer le pas de désynchronisation Pds correspondant à la position du pas collectif P à partir de laquelle la transmission du couple mécanique entre un groupe turbomoteur et une boîte de transmission principale est interrompue,
   - à afficher le pas de désynchronisation Pds sur l'échelle mobile (6a) à l'aide d'un repère flottant (9),
   - à traduire en temps réel et en fonction de paramètres physiques de vol, la valeur limite maximale Nr+ et la valeur limite minimale Nr-, respectivement en position limite inférieure Pinf et en position limite supérieure Psup du pas collectif P, lesdites positions limites Pinf et Psup étant actives,
   - à afficher les positions limites inférieure Pinf et supérieure Psup sur l'échelle mobile (6a),
   - à comparer en temps réel la valeur réelle Nr de la vitesse de rotation du rotor à la valeur de référence Nr0 de la vitesse de rotation du rotor,
   - et à afficher sur l'écran de visualisation (5), lorsqu'il apparaît un écart déterminé entre la valeur réelle Nr et la valeur de référence Nr0 de la vitesse de rotation du rotor, au moins une information corrective, au moins visuelle, sur l'action que doit entreprendre le pilote sur le réglage du pas collectif P.

**2.** Procédé d'aide au pilotage selon la revendication 1,
**caractérisé en ce qu'**il consiste à utiliser une information corrective dont la présentation change lorsque la position du pas collectif P s'approche de la position limite inférieure Pinf ou de la position limite supérieure Psup, pour attirer davantage l'attention pilote.

**3.** Procédé d'aide au pilotage selon la revendication 2,
**caractérisé en ce qu'**il consiste à combiner l'information corrective visuelle avec une alerte sonore en cas de dépassement par la valeur réelle Nr, de la valeur limite maximale Nr+ ou de la valeur limite minimale Nr- de la vitesse de rotation du rotor.

**4.** Procédé d'aide au pilotage selon l'une quelconque des revendications précédentes,
**caractérisé en ce qu'**il consiste à déterminer le pas de désynchronisation par l'intermédiaire d'un algorithme dans lequel interviennent des données théoriques et/ou des données mesurées lors d'essais en vol.

**5.** Procédé d'aide au pilotage selon l'une quelconque des revendications précédentes,
**caractérisé en ce qu'**il consiste à utiliser un instrument de Première Limitation « IPL », lequel permet grâce à des moyens d'affichage de présenter sur l'écran de visualisation (5) des informations relatives à un paramètre, parmi les paramètres de surveillance de l'aéronef dont la valeur réelle est la plus proche de la valeur limite définie pour ledit paramètre ainsi que d'indiquer sur ledit écran de visualisation (5) l'échelle mobile (6a).

**6.** Procédé d'aide au pilotage selon l'une quelconque des revendications précédentes,
**caractérisé en ce qu'**il consiste grâce à un cadran complémentaire (14) à afficher dans une fenêtre fixe (15) au voisinage de l'échelle mobile (6a), une valeur digitale correspondant à la valeur réelle Nr de la vitesse de rotation du rotor.

**7.** Procédé d'aide au pilotage selon la revendication 6,
**caractérisé en ce qu'**il consiste à associer à la fenêtre fixe (15), une échelle mobile complémentaire (17), laquelle présente des zones (20,21) de couleur différente et une zone centrale neutre (19) comportant un graduation centrale (19a), lesdites zones correspondant des valeurs réelles Nr de la vitesse de rotation du rotor et à déplacer ladite échelle mobile complémentaire (17) pour afficher la zone de couleur (19,20,21) comportant la valeur réelle Nr en regard de la fenêtre fixe (15) constituant un autre repère fixe (16).

**8.** Procédé d'aide au pilotage selon l'une quelconque des revendications précédentes,
**caractérisé en ce qu'**il consiste à utiliser en tant que paramètres physiques de vol, notamment des valeurs mesurées de la température et de l'altitude, des valeurs de la vitesse d'avancement de et/ou d'autres paramètres véhicules de l'aéronef.

**9.** Procédé d'aide au pilotage selon l'une quelconque des revendications précédentes,
**caractérisé en ce qu'**il consiste à utiliser le calculateur de l'instrument de Première Limitation « IPL» pour déterminer en temps réel les positions limites supérieure Psup et inférieure Pinf du pas collectif ainsi que le pas de désynchronisation Pds.

**10.** Procédé d'aide au pilotage selon l'une quelconque des revendications 1 à 8,
**caractérisé en ce qu'**il consiste à utiliser un calculateur indépendant de l'instrument de Première Limitation « IPL» pour déterminer en temps réel les positions limites supérieure Psup et inférieure Pinf du pas collectif P ainsi que le pas de désynchronisation Pds.

**11.** Procédé d'aide au pilotage selon l'un quelconque des revendications 1 à 10,
**caractérisé en ce qu'**il consiste à utiliser des données mesurées lors d'essais en vol pour déterminer en temps réel les positions limites supérieure Psup et inférieure Pinf du pas collectif P.

**12.** Procédé d'aide au pilotage selon la revendication 6,
**caractérisé en ce qu'**il consiste, lorsque l'aéronef dispose d'au moins deux ensembles moteurs, à indiquer au moins visuellement sur le cadran complémentaire (14) au voisinage de l'échelle mobile complémentaire (17), le dysfonctionnement de l'un des ensembles moteurs.

**13.** Indicateur de pilotage d'un aéronef, pour mettre en oeuvre le procédé selon l'une au moins des revendications 1 à 12, comportant des capteurs aptes à délivrer des informations relatives à différents paramètres de surveillance de l'aéronef, des moyens de traitement desdites informations du genre calculateur et des moyens d'affichage pour présenter sur un écran de visualisation (5) des informations,
**caractérisé en ce qu'**il comprend :

- une échelle mobile (6a) par rapport à un repère fixe (6b) sur l'écran de visualisation (5), indiquant la position du pas collectif P,
- des moyens de traitement complémentaires pour traduire en temps réel des valeurs limites maximale Nr+ et minimale Nr- prédéterminées de la vitesse de rotation du rotor respectivement en positions limites inférieure Pinf et supérieure Psup du pas collectif P, lesdites positions limites Pinf et Psup étant actives,
- lesdits moyens de traitement complémentaires permettant de déterminer le pas de désynchronisation Pds correspondant à la position du pas collectif à partir de laquelle la transmission du couple mécanique entre le groupe turbomoteur et la boîte de transmission principale est interrompue,
- des moyens d'affichage pour afficher en temps réel les positions limites inférieure Pinf et supérieure Psup ainsi que le pas de désynchronisation Pds sur l'échelle mobile (6a),
- les moyens de traitement complémentaires comportant des moyens de comparaison pour comparer en temps réel la valeur réelle Nr à la valeur de référence Nr0 de la vitesse de rotation du rotor,
- les moyens de traitement complémentaires comportant également des moyens d'activation des moyens d'affichage pour afficher sur l'écran de visualisation (5), en fonction du résultat de la comparaison donnant l'écart entre la valeur réelle Nr et la valeur de référence Nr0 de la vitesse de rotation du rotor, une information corrective, au moins visuelle, sur l'actionnement du manche de pas collectif à entreprendre.

**14.** Indicateur de pilotage selon la revendication 13,
**caractérisé en ce que** les moyens de traitement, les moyens de traitement complémentaires, les moyens d'affichage et les moyens d'activation sont pilotés par un calculateur d'un instrument de Première Limitation « IPL».

**15.** Indicateur de pilotage selon la revendication 13,
**caractérisé en ce que** les moyens de traitement complémentaires et les moyens d'activation sont pilotés par un calculateur distinct du calculateur d'un Instrument de Première Limitation « IPL ».

**16.** Indicateur de pilotage selon la revendication 14 ou 15,
**caractérisé en ce que** le calculateur comporte des ressources logicielles pour déterminer par des opérations de calcul, d'une part les positions limites supérieure Psup et inférieure Pinf du pas collectif P et d'autre part le pas de désynchronisation Pds.

**17.** Indicateur de pilotage selon la revendication 14 ou 15,
**caractérisé en ce que** le calculateur comporte également des moyens de mémorisation dans lesquels sont stockées des données prédéterminées ainsi que des données d'essais en vol, lesdites données étant utilisées dans les opérations de calcul.

**18.** Indicateur de pilotage selon l'une quelconque des revendications 13 à 17,
**caractérisé en ce que** l'écran de visualisation (5) comprend deux cadrans (6,7) juxtaposés, l'un (7) étant utilisé pour un instrument de première limitation (IPL) et l'autre (6) étant utilisé notamment pour afficher l'échelle mobile (6a) indiquant les positions limites du pas et le pas de désynchronisation.

**19.** Indicateur de pilotage selon l'une quelconque des revendications 13 à 17,
**caractérisé en ce que** l'écran de visualisation (5) comprend un cadran unique utilisé pour un instrument de première limitation (IPL) et pour afficher l'échelle mobile (6a) indiquant les positions limites du pas et le pas de désynchronisation.

**20.** Indicateur de pilotage selon l'une quelconque des revendications 13 à 19,
**caractérisé en ce qu'**il comprend un cadran complémentaire (14) indiquant la valeur réelle Nr de la vitesse de rotation du rotor dans une fenêtre fixe (15) laquelle constitue un autre repère fixe (16), au moins une information visuelle complémentaire sur l'écart entre la valeur réelle Nr et la valeur de référence Nr0 de la vitesse de rotation du rotor et/ou au moins une information sur l'état de fonctionnement du ou des ensembles moteurs.

**21.** Instrument de Première Limitation amélioré pour un aéronef à voilure tournante,
**caractérisé en ce qu'**il comprend un indicateur de pilotage conforme à l'une quelconque des revendications 13 à 20.

**22.** Aéronef à voilure tournante du genre hélicoptère comportant un indicateur de pilotage conforme à l'une quelconque des revendications 13 à 20.

**Claims**

**1.** Piloting assistance method for assisting the piloting of a rotary wing aircraft, the method consisting in using the real value Nr and the reference value Nr0 for the speed of rotation of at least one rotor and in using display means to present on a display screen (5) a movable scale (6a) for indicating the position of the collective pitch P, **characterized in that** the method consists in:

- using a maximum limit value Nr+ and a minimum limit value Nr- for the speed of rotation of the rotor;
- determining the desynchronization pitch Pds corresponding to the position of the collective pitch P from which the transmission of mechanical torque between a turbine engine unit and a main gearbox is interrupted;
- displaying the desynchronization pitch Pds on the movable scale (6a) by using a floating reference marker (9);
- translating in real time and as a function of physical flight parameters, the maximum limit value Nr+ and the minimum limit value Nr- respectively into a bottom limit position Pinf and a top limit position Psup for the collective pitch P, said limit positions Pinf and Psup being active;
- displaying the bottom and top limit positions Pinf and Psup on the movable scale (6a);
- comparing in real time the real value Nr for the speed of rotation of the rotor with the reference value Nr0 for the speed of rotation of the rotor; and
- when a determined difference appears between the real value Nr and the reference value Nr0 for the speed of rotation of the rotor, displaying at least one item of corrective information on the display screen (5), said information being at least visual and concerning the action to be undertaken by the pilot on the adjustment of the collective pitch P.

**2.** Piloting assistance method according to Claim 1, **characterized in that** it consists in using corrective information of presentation that changes when the position of the collective pitch P approaches the bottom limit position Pinf or the top limit position Psup in order to attract the pilot's attention more strongly.

**3.** Piloting assistance method according to Claim 2, **characterized in that** it consists in combining the visual corrective information with an audible warning in the event of the real value Nr passing the maximum limit value Nr+ or the minimum limit value Nr- for the speed of rotation of the rotor.

**4.** Piloting assistance method according to any one of the preceding claims, **characterized in that** it consists in determining the desynchronization pitch by means of an algorithm involving theoretical data and/or data measured during flight testing.

**5.** Piloting assistance method according to any one of the preceding claims, **characterized in that** it consists in using a First Limit Instrument "fly", which uses display means to present information on the display screen (5), said information relating to that one of the parameters selected from amongst the monitoring parameters of the aircraft for which the real value is closest to the limit value defined for said parameter, and also display the movable scale (6a) on said display screen (5).

**6.** Piloting assistance method according to any one of the preceding claims, **characterized in that** it consists in using an additional dial (14) to display a digital value in a stationary window (15) in the vicinity of the movable scale (6a), the digital value corresponding to the real value Nr for the speed of rotation of the rotor.

**7.** Piloting assistance method according to Claim 6, **characterized in that** it consists in associating an additional movable scale (17) with the stationary window (15), which additional movable scale presents zones (20,21) of different colours together with a neutral central zone (19) including a central graduation (19a), said zones corresponding to real values Nr for the speed of rotation of the rotor, and in moving said additional movable scale (17) to display the coloured zones (19,20,21) including the real value Nr in register with the stationary window (15) constituting another stationary reference marker (16).

**8.** Piloting assistance method according to any one of the preceding claims, **characterized in that** it consists in using as physical flight parameters, in particular measured values of temperature and altitude, speed of advance values, and/or values of other vehicle parameters of the aircraft.

9. Piloting assistance method according to any one of the preceding claims, **characterized in that** it consists in using the computer of the First Limit Instrument "FLI" to determine in real time the top and bottom limit positions Psup and Pinf for the collective pitch and also the desynchronization pitch Pds.

10. Piloting assistance method according to any one of Claims 1 to 8, **characterized in that** it consists in using a computer independent of the First Limit Instrument "FLI" to determine in real time the top and bottom limit positions Psup and Pinf for the collective pitch P and also the desynchronization pitch Pds.

11. Piloting assistance method according to any one of Claims 1 to 10, **characterized in that** it consists in using data measured during flight testing to determine in real time the top and bottom limit positions Psup and Pinf for the collective pitch P.

12. Piloting assistance method according to Claim 6, **characterized in that**, when the aircraft has at least two engine units, the method consists in indicating the malfunction of one of the engine units at least visually on the additional dial (14) in the vicinity of the additional movable scale (17).

13. Aircraft piloting indicator for implementing the method according to at least one of Claims 1 to 12, the indicator including sensors suitable for delivering information relating to various monitoring parameters of the aircraft, processor means for processing said information, such as a computer, and display means for presenting information on a display screen (5), **characterized in that** the indicator comprises:

   - a scale (6a) that is movable relative to a stationary reference marker (6b) on the display screen (5), the scale indicating the position of the collective pitch P;
   - additional processor means for translating in real time predetermined maximum and minimum limit values Nr+ and Nr- for the speed of rotation of the rotor respectively into bottom and top limit positions Pinf and Psup for the collective pitch P, said limit positions Pinf and Psup being active;
   - said additional processor means serving to determine the desynchronization pitch Pds corresponding to the position of the collective pitch beyond which the transmission of mechanical torque between the turbine engine unit and the main gearbox is interrupted;
   - display means for displaying in real time the bottom and top limit positions Pinf and Psup together with the desynchronization pitch Pds on the movable scale (6a);
   - the additional processor means including comparator means for comparing in real time the real value Nr with the reference value Nr0 for the speed of rotation of the rotor; and
   - the additional processor means also including activation means for activating the display means to display corrective information on the display screen (5) as a function of the result of the comparison giving the difference between the real value Nr and the reference value Nr0 for the speed of rotation of the rotor, the corrective information being at least visual and concerning the action to be undertaken on the collective pitch stick.

14. Piloting indicator according to Claim 13, **characterized in that** the processor means, the additional processor means, the display means, and the activation means are controlled by a computer of a First Limit Instrument "FLI".

15. Piloting indicator according to Claim 13, **characterized in that** the additional processor means and the activation means are controlled by a computer distinct from the computer of a First Limit Instrument "FLI".

16. Piloting indicator according to Claim 14 or 15, **characterized in that** the computer includes software resources for determining by calculations firstly the top and bottom limit positions Psup and Pinf for the collective pitch P, and secondly the desynchronization pitch Pds.

17. Piloting indicator according to Claim 14 or 15, **characterized in that** the computer also includes memory means having stored therein predetermined data together with flight test data, said data being used in the calculations.

18. Piloting indicator according to any one of Claims 13 to 17, **characterized in that** the display screen (5) comprises two juxtaposed dials (6,7), one of the dials (7) being used for a First Limit Instrument (FLI) and the other dial (6) being used in particular to display the movable scale (6a) indicating the pitch limit positions and the desynchronization pitch.

**19.** Piloting indicator according to any one of Claims 13 to 17,
**characterized in that** the display screen (5) comprises a single dial used for a First Limit Instrument (FLI) and for displaying the movable scale (6a) indicating the pitch limit positions and the desynchronization pitch.

**20.** Piloting indicator according to any one of Claims 13 to 19,
**characterized in that** it comprises an additional dial (14) indicating: the real value Nr for the speed of rotation of the rotor in a stationary window (15) that constitutes another stationary reference marker (16); at least one item of additional visual information concerning the difference between the real value Nr and the reference value Nr0 for the speed of rotation of the rotor; and/or at least one item of information concerning the state(s) of operation of the engine unit(s).

**21.** Improved First Limit Instrument for a rotary wing aircraft,
**characterized in that** the instrument comprises a piloting indicator in accordance with any one of Claims 13 to 20.

**22.** Rotary wing aircraft of the helicopter kind including a piloting indicator in accordance with any one of Claims 13 to 20.


**Patentansprüche**

**1.** Verfahren zur Steuerungshilfe eines Drehflügelluftfahrzeugs, welches darin besteht einen reellen Wert Nr und einen Bezugswert Nr0 der Drehzahl mindestens eines Rotors zu verwenden und mit Anzeigemitteln auf einem Bildschirm (5) eine gleitende Skala (6a) anzuzeigen, um die Lage des Pitches P anzugeben, **gekennzeichnet durch**:

- Verwenden eines oberen Grenzwertes Nr+ und eines unteren Grenzwertes Nrfür die Drehzahl des Rotors,
- Bestimmen des Desynchronisationsschrittes Pds der der Lage des Pitches P entspricht, ausgehend von dem die Übertragung des mechanischen Momentes zwischen einer Turbomotorgruppe und einem Hauptgetriebe unterbrochen ist,
- Anzeigen des Desynchronisationsschrittes Pds auf der mobilen Skala (6a) mittels einer fließenden Markierung (9),
- Übertragen in Echtzeit und in Abhängigkeit von physikalischen Flugparametern des oberen Grenzwertes Nr+ und des unteren Grenzwertes Nr-, jeweils in der unteren Grenzstellung Pinf und in der oberen Grenzstellung Psup des Pitches P, wobei die Grenzstellungen Pinf und Psup aktiv sind,
- Anzeigen der unteren und der oberen Grenzstellungen Pinf und Psup auf der gleitenden Skala (6a),
- Vergleichen des tatsächlichen Wertes Nr der Drehzahl des Rotors mit dem Bezugswert Nr0 der Drehzahl des Rotors in Echtzeit
- und Anzeigen auf dem Bildschirm (5) eines bestimmten Unterschieds zwischen dem reellen Wert Nr und dem Bezugswert Nr0 der Drehzahl des Rotors, wenn dieser auftritt, mindestens einer Korrektivinformation, zumindest visuell, bezüglich der Aktion, die der Pilot zur Regelung des Pitches P unternehmen muss.

**2.** Verfahren zur Steuerungshilfe nach Anspruch 1, **gekennzeichnet durch** die Verwendung einer Korrektivinformation, deren Darstellung sich ändert während die Stellung des Pitches P sich der unteren Grenzstellung Pinf oder der oberen Grenzstellung Psup nähert, um die Aufmerksamkeit des Piloten darauf stärker zu lenken.

**3.** Verfahren zur Steuerungshilfe nach Anspruch 2, **gekennzeichnet durch** Kombinieren der visuellen Korrektivinformation mit einem akustischen Alarm, wenn der reelle Wert Nr den maximalen Grenzwert Nr+ oder den minimalen Grenzwert Nr- der Drehzahl des Rotors überschreitet, beziehungsweise unterschreitet.

**4.** Verfahren zur Steuerungshilfe nach einem der vorstehenden Ansprüche, **gekennzeichnet durch** das Bestimmen des Desynchronisationsschrittes mittels eines Algorithmus, in dem theoretische Werte oder während Flugversuchen gemessene Werte eingehen.

**5.** Verfahren zur Steuerungshilfe nach einem der vorstehenden Ansprüche, **gekennzeichnet durch** das Verwenden eines Instrumentes einer ersten Begrenzung "IPL", welches es mit seinem Anzeigemitteln erlaubt auf einem Bildschirm (5) Informationen bezüglich eines Parameters zu präsentieren, unter denen sich Überwachungsparameter des Luftfahrzeugs befinden deren reeller Wert am nächsten dem vorbestimmten Grenzwert tür diesen Parameter liegt, sowie das Anzeigen der gleitenden Skala (6a) auf dem Bildschirm (5).

**6.** Verfahren zur Steuerungshilfe nach einem der vorstehenden Ansprüche **dadurch gekennzeichnet, dass** mit einer zusätzlichen Anzeige (14) in einem festgelegten Fenster (15) in der Nähe der gleitenden Skala (6a) ein digitaler Wert angezeigt wird, der dem reellen Wert Nr der Drehzahl des Rotors entspricht.

7. Verfahren zur Steuerungshilfe nach Anspruch 6, **gekennzeichnet durch** Verknüpfen des festgelegten Fensters (15) mit einer zusätzlichen gleitenden Skala (17), die Bereiche (20,21) unterschiedlicher Farbe und einen zentralen neutralen Bereich (19) anzeigt, der eine zentrale Abstufung (19a) aufweist, wobei die Bereiche, die den reellen Werten Nr der Drehzahl des Rotors entsprechen und **durch** Verschieben der zusätzlichen gleitenden Skalen (17) um den farbigen Bereich (19, 20, 21) anzuzeigen, der den reellen Wert Nr beinhaltet bezüglich des festgelegten Fensters (15), welches einen anderen festgelegten Bezugswert (16) bildet.

8. Verfahren zur Steuerungshilfe nach einem der vorstehenden Ansprüche, **gekennzeichnet durch** Verwenden als physikalische Flugparameter, insbesondere Messwerte der Temperatur und der Höhe, Vortriebsgeschwindigkeitswerte und/oder andere Flugparameter des Luftfahrzeugs.

9. Verfahren zur Steuerungshilfe nach einem der vorstehenden Ansprüche, **gekennzeichnet durch** Verwenden des Rechners des Instruments zur ersten Begrenzung "IPL", um in Echtzeit die obere Grenzstellung Psup und die untere Grenzstellung Pinf des Pitches sowie den Desynchronisationsschritt Pds zu bestimmen.

10. Verfahren zur Steuerungshilfe nach einem der Ansprüche 1 bis 8, **gekennzeichnet durch** Verwenden eines von dem Instrument der ersten Begrenzung "IPL" unabhängigen Rechners um in Echtzeit die obere Grenzstellung Psup und die untere Grenzstellung Pinf des Pitches P sowie den Desynchronisationsschritt Pds zu bestimmen.

11. Verfahren zur Steuerungshilfe nach einem der Ansprüche 1 bis 10, **gekennzeichnet durch** Verwenden von während Flugversuchen gemessener Werte zur Echtzeitbestimmung der oberen Grenzstellung Psup und der unteren Grenzstellung Pinf des Pitches P.

12. Verfahren zur Steuerungshilfe nach Anspruch 6, **dadurch gekennzeichnet, dass** wenn das Luftfahrzeug mindestens zwei Motoranordnungen aufweist mindestens visuell auf einer zusätzlichen Anzeige (14) in der Nähe der zusätzlichen gleitenden Skala (17) das Nichtfunktionieren eines der Motoranzeigen angezeigt wird.

13. Steuerungsanzeige eines Luftfahrzeugs zur Durchführung des Verfahrens nach mindestens einem der Ansprüche 1 bis 12 mit Detektoren zur Lieferung von Informationen bezüglich verschiedener Überwachungsparameter des Luftfahrzeugs, Verarbeitungsmitteln für diese Informationen, wie Rechnen und mit Anzeigemitteln zum Anzeigen von Informationen auf einem Bildschirm (5) **gekennzeichnet durch**

- eine bezüglich eines festen Bezugspunktes (6b) auf dem Bildschirm (5) gleitende Skala (6a), die die Lage des Pitches P anzeigt,
- zusätzliche Verarbeitungsmittel, um in Echtzeit vorbestimmte maximale Grenzwert Nr+ und minimale Grenzwerte Nr- der Drehzahl des Rotors anzugeben, jeweils in den unteren Grenzlagen Pinf und oberen Grenzlagen Psup des Pitches P, wenn diese Grenzlagen Pinf und Psup aktiv sind,
- wobei die zusätzlichen Verarbeitungsmittel es erlauben den der Lage des Pitches entsprechenden Desynchronisationsschritt Pds zu bestimmen, ab dem die Übertragung des mechanischen Momentes zwischen der Turbomotorgruppe und dem Hauptgetriebe unterbrochen ist,
- Anzeigemittel zum Anzeigen in Echtzeit der unteren Grenzlage Pinf und der oberen Grenzlage Psup sowie des Desynchronisationsschrittes Pds auf der gleitenden Skala (6a),
- zusätzliche Verarbeitungsmittel, die Vergleichsmittel aufweisen zum Vergleichen des reellen Wertes Nr mit dem Bezugswert Nr0 der Drehzahl des Rotors in Echtzeit,
- zusätzliche Verarbeitungsmittel, die ebenfalls Aktivierungsmittel der Anzeigemittel aufweisen zum Anzeigen auf dem Bildschirm (5) in Abhängigkeit von dem Ergebnis des Vergleiches, der den Unterschied zwischen dem reellen Wert Nr und dem Bezugswert Nr0 der Rotordrehzahl angibt einer Korrekturinformation, zumindest visuell, auf die Betätigung des Steuerknüppels des Pitches hin.

14. Steuerungsanzeige gemäß Anspruch 13 **dadurch gekennzeichnet, dass** die Verarbeitungsmittel, die zusätzlichen Verarbeitungsmittel, die Anzeigemittel und die Betätigungsmittel durch einen Rechner eines Instruments zur ersten Begrenzung "IPL" gesteuert werden.

15. Steuerungsanzeige nach Anspruch 13, **dadurch gekennzeichnet, dass** die zusätzlichen Verarbeitungsmittel und die Betätigungsmittel durch einen getrennten Rechner des Rechners eines Instruments zur ersten Begrenzung "IPL" gesteuert werden.

16. Steuerungsanzeige nach den Ansprüche 14 oder 15, **dadurch gekennzeichnet, dass** der Rechner Programme aufweist zum Bestimmen durch Rechenoperationen einerseits der oberen Grenzposition Psup und der unteren Grenzposition Pinf des Pitches P und andererseits des Desynchronisationsschrittes Pds.

17. Steuerungsanzeige nach den Ansprüchen 14 oder 15, **dadurch gekennzeichnet, dass** der Rechner außerdem Speichermittel aufweist, in denen die vorbestimmten Daten gespeichert sind sowie Daten von Versuchsflügen, wobei die Daten bei den Rechenoperationen verwendet werden.

18. Steuerungsanzeige nach einem der Ansprüche 13 bis 17 **dadurch gekennzeichnet, dass** der Bildschirm (5) zwei nebeneinander liegende Anzeigebereiche (6, 7) aufweist, wobei einer (7) als ein Instrument zur ersten Begrenzung (IPL) verwendet wird und die andere Anzeige (6) insbesondere dazu verwendet wird die gleitende Skala (6a) anzuzeigen, die die Grenzlagen des Pitches und des Desynchronisationsschrittes anzeigt.

19. Steueranzeige nach einem der Ansprüche 13 bis 17, **dadurch gekennzeichnet, dass** der Bildschirm (5) einen einzigen Anzeigebereich aufweist, der für ein Instrument zur ersten Begrenzung (IPL) verwendet wird und um die gleitende Skala (6a) anzuzeigen, die die Grenzlagen des Pitches und des Desynchronisationsschrittes anzeigt.

20. Steuerungsanzeige nach einem der Ansprüche 13 bis 19, **gekennzeichnet durch** eine zusätzliche Anzeige (14), die den reellen Wert Nr der Rotordrehzahl in einem vorbestimmten Fenster (15) angibt, die einen anderen festen Bezugspunkt (16) bildet, sowie mindestens eine zusätzliche visuelle Information bezüglich des Unterschiedes zwischen dem reellen Wert Nr und dem Bezugswert Nr0 der Rotordrehzahl und/oder mindestens eine Information über den Betriebszustand der Motoranordnung beziehungsweise Motoranordnungen.

21. Verbessertes Instrument zur ersten Begrenzung eines Luftfahrzeugs mit Drehflügeln, **gekennzeichnet durch** eine Steuerungsanzeige nach einem der Ansprüche 13 bis 20.

22. Luftfahrzeug mit Drehflügeln der Art eines Helikopters mit einer Steuerungsanzeige nach einem der Ansprüche 13 bis 20.

Fig.1a

Fig.1b

Fig.2

Fig.3

Fig.4

Fig.5

Fig.6

Fig.7

Fig.8

Fig.9

Fig.10

Fig.11

**EP 2 236 988 B1**

**RÉFÉRENCES CITÉES DANS LA DESCRIPTION**

**Documents brevets cités dans la description**

- EP 0816226 A
- WO 2006081334 A

- US 2001044679 A